# EUROPÄISCHE PATENTSCHRIFT

(11) **EP 1 680 606 B1**
(45) Veröffentlichungstag und Bekanntmachung des Hinweises auf die Patenterteilung: **25.03.2015**
(21) Anmeldenummer: 04791067.4
(22) Anmeldetag: 29.10.2004
(51) Int. Cl.: F16B 25/00, F16B 35/04, E04B 1/38, F16B 5/02

(54) **BEFESTIGUNGSELEMENT**
FIXING ELEMENT
ELEMENT DE FIXATION

(30) Priorität: 30.10.2003 DE 10351884
(43) Veröffentlichungstag der Anmeldung: 19.07.2006
(73) Patentinhaber: Adolf Würth GmbH & Co. KG, 74653 Künzelsau (DE); Würth International AG, 7000 Chur (CH)
(72) Erfinder: WIELAND, Achim, 74211 Leingarten (DE)
(74) Vertreter: Patentanwälte Ruff, Wilhelm, Beier, Dauster & Partner
(86) Internationale Anmeldenummer: PCT/EP2004/012311
(87) Internationale Veröffentlichungsnummer: WO 2005/042987

(56) Entgegenhaltungen:
- EP-A1- 2 154 054
- DE-A1- 3 414 845
- DE-A1- 19 806 690
- DE-A1- 19 813 596
- DE-A1-102009 057 658
- DE-U1- 29 812 526
- US-B1- 6 264 414
- "VERBUS KONSTRUKTIONSTEILE., ANNOUNCEMENT" VERBUS, XX, XX, Januar 1985 (1985-01), Seiten 1-12, XP000319460

## Beschreibung

Die Erfindung betrifft ein Befestigungselement für ein Bauwerk, sowie eine Verwendung dieses Befestigungselements.

Es gibt eine Vielzahl von Befestigungselementen, die auch als Ankerbolzen, Ankerstangen, Spreizdübel oder dergleichen bezeichnet werden. Es gibt in der Zwischenzeit auch so genannte Betonschrauben, das heißt Schrauben, die in ein Bohrloch ähnlich wie eine normale Schraube eingeschraubt werden und sich dabei in die Wand des Bohrlochs ein Gewinde schneiden. Hierfür besitzen die Betonschrauben ein spezielles Gewinde. Betonschrauben haben den Vorteil, dass sie in dem Bohrloch formschlüssig festgelegt sind.

Es ist bekannt, dass bei Bauwerken durch innere und äußere Einflüsse zu große Zugspannungen und somit Risse im Stahlbeton entstehen können. Die innenliegende Stahlbewehrung verhindert jedoch bei normalen Gebrauchslasten ein übergrosses Aufweiten des Risses. Der Rissverlauf wird oftmals durch Befestigungspunkte angezogen. Für solche Zugzonen zugelassene Befestigungselemente gleichen dies durch ein Nachspreizen aus. Bei Spreizdübeln wird beispielsweise durch eine spezielle Form des Spreizelementes dafür gesorgt, dass dieses sich gegenüber der Wand des Bohrlochs nicht verschiebt, so dass bei einer Erweiterung des Bohrlochs durch einen Riss dass das Spreizelement aufweitende Konuselement sich zwar verschiebt, dadurch aber eine verstärkte Aufweitung des Spreizelementes verursacht. Die Festigkeit bzw. Belastbarkeit der Verbindung verschlechtert sich dadurch nicht, wohl aber die Vorspannkraft, mit der beispielsweise ein zu befestigendes Element gegen eine Fläche des Bauwerks festgehalten wird. Es gibt nun aber Fälle, wo ein zu befestigendes Element mit einer starken Kraft gegen ein Bauwerk angepresst werden soll, welche auch bei auftretenden Spaltrissen nicht unter eine vorgegebene Grenze fallen darf.

Ein solcher Fall kann dann vorliegen, wenn eine Platte an einer Oberfläche angebrächt werden soll, die ihrerseits in einer Richtung parallel zur Oberfläche stark beansprucht wird.

Es ist bereits eine gewindeformende Betonschraube bekannt, die zwischen einem Schraubenkopf und einem vorderen Betongewinde einen gewindefreien Abschnitt aufweist. Dieser gewindefreie Abschnitt weist den gleichen Durchmesser auf wie der Kerndurchmesser des Gewindeabschnitts (DE 29812526 U1).

Weiterhin ist ein Verbindungselement für zwei Maschinen- oder Bauteile bekannt (US 6264414 B1). Bei diesem Verbindungselement ist zwischen einem vorderen Gewindeabschnitt und einem Schraubenkopf ein Mittelabschnitt mit vergrößerten Durchmesser und daran anschließend ein gewindefreier Abschnitt angeordnet. Der Durchmesser des gewindefreien Abschnitts ist größer als der Kerndurchmesser des Gewindeabschnitts.

Der Erfindung liegt die Aufgabe zu Grunde, eine Möglichkeit zu schaffen, auch in solchen Fällen eine dauerhafte und mit ausreichender Vorspannkraft bleibende Befestigung zu schaffen.

Zur Lösung dieser Aufgabe schlägt die Erfindung ein Befestigungselement mit den im Anspruch 1 genannten Merkmalen vor. Die Erfindung schlägt ebenfalls die Verwendung eines solchen Befestigungselements mit den sich auf die Verwendung beziehenden Merkmalen vor. Weiterbildungen der Erfindung sind Gegenstand von Unteransprüchen.

Der vordere mit dem Bauwerk formschlüssig zu verbindende Schaftabschnitt wird in ein vorher gebohrtes Bohrloch eingeschraubt. Die Befestigung des zu befestigenden Elementes geschieht an oder mit Hilfe des Befestigungsabschnitts. Bei einem geringfügigen Erweitern des Bohrlochs kann sich der Schaftabschnitt auf Grund des Formschlusses nur ganz geringfügig verschieben. Die durch die geringfügige Verschiebung verursachte Verringerung der Anpresskraft wird durch den als kräftige Feder wirkenden Verbindungsabschnitt aufgenommen. Der Verbindungsabschnitt wird also beim Befestigen des Befestigungselementes stark auf Dehnung beansprucht. Diese Dehnungsbeanspruchung lässt bei einer Erweiterung des Bohrlochs geringfügig nach, bleibt aber weiterhin so stark, dass die Anpresskraft nicht unter den vorher gewünschten Grenzwert abfällt.

Wie die formschlüssige Verbindung zwischen dem vorderen Schaftteil und dem Bauwerke geschieht, hängt von den Umständen des Einzelfalls ab. Sie kann auf unterschiedliche Weisen durchgeführt werden, beispielsweise durch einen Hinterschnitt. Dies hängt auch von der Art des Bauwerks und von der Möglichkeit zur Anbringung des Befestigungselements ab.

Als besonders günstig hat es sich herausgestellt, dass der vordere Schaftabschnitt ein Betongewinde aufweist, so dass sich das Befestigungselement wie eine Betonschraube in das vorher hergestellte Bohrloch einschrauben lässt. Bei einem entsprechend langen Schaftabschnitt führt auch das Betongewinde auf Grund der sehr langen Gewindelinie zu einem sehr sicheren Festlegen und einem besonders guten Formschluss. Eine solche Ausgestaltung des Befestigungselements hat auch den Vorteil, dass eine nachträgliche Anbringung ohne große Probleme möglich ist, da nur ein Bohrloch einzubringen ist, in das dann anschließend die Schraube ohne Wartezeiten eingeschraubt werden kann.

Der in seinem wirksamen Durchmesser verringerte Verbindungsabschnitt ist in Weiterbildung der Erfindung gewindefrei , insbesondere glatt.

In nochmaliger Weiterbildung der Erfindung kann vorgesehen sein, dass der Durchmesser des Verbindungsabschnitts um 10 bis 30 Prozent kleiner ist als der Kerndurchmesser des Einschraubabschnitts.

In nochmaliger Weiterbildung der Erfindung kann vorgesehen sein, dass die Länge des Verbindungsabschnitts ca. 0,2 bis 0,4 der Länge des gesamten Befestigungselementes entspricht, oder anderes ausgedrückt, etwa 0,4 bis 0,7 der Länge des formschlüssig zu verbindenden vorderen Schaftabschnitts.

Die Erfindung sieht vor, dass das Befestigungselement so anzuordnen ist, dass der Verbindungsabschnitt im Mauerwerk untergebracht ist, also auch im Bohrloch.

Ein solches Befestigungselement wird von der Erfindung als Element zur Befestigung von Gegenständen an einem Bauwerk in einer Zugzone vorgeschlagen. Unter Zugzonen sind solche Bereiche eines Bauwerks zu verstehen, die auf Zug beansprucht werden.

Die Erfindung sieht in Weiterbildung ebenfalls vor, das Befestigungselement so zu verwenden, dass der Verbindungsabschnitt in dem Bauwerk ohne Kraftschluss mit dem Bohrloch angeordnet wird.

Weitere Merkmale, Einzelheiten und Vorzüge der Erfindung ergeben sich aus den Patentansprüchen und der Zusammenfassung, deren beider Wortlaut durch Bezugnahme zum Inhalt der Beschreibung gemacht wird, der folgenden Beschreibung einer bevorzugten Ausführungsform der Erfindung sowie anhand der Zeichnung. Hierbei zeigen:
- Figur 1: eine Seitenansicht eines Befestigungselements nach der Erfindung;
- Figur 2: schematisch die Verwendung eines Befestigungselements nach der Erfindung zur Anbringung einer metallischen Platte an einem Betonbauwerk.

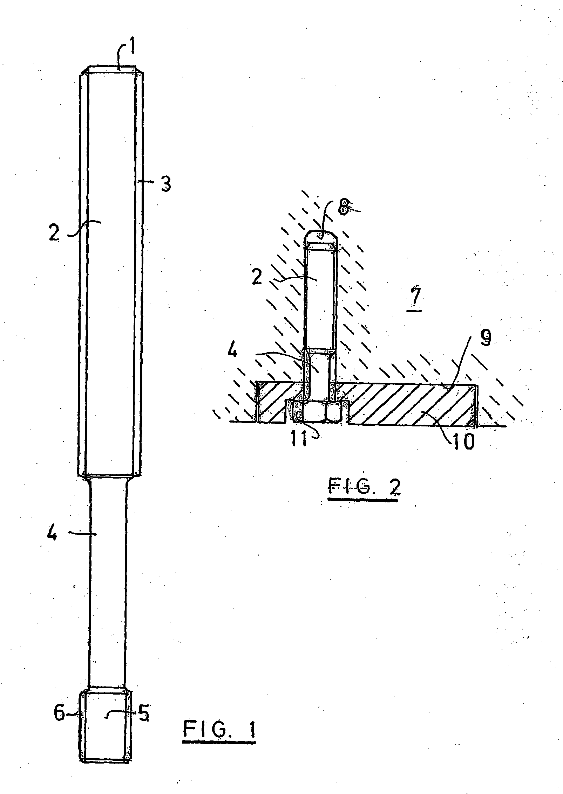

Figur 1 zeigt, vereinfacht dargestellt, die Seitenansicht eines Befestigungselements nach der Erfindung. Das Befestigungselement ist einstückig aus Metall hergestellt und weist einen von dem vorderen Ende 1 ausgehenden Schaftabschnitt 2 mit einem Betongewinde 3 auf.

Das Betongewinde 3 reicht bis fast an das vordere Ende 1 des Befestigungselements heran. Das vordere Ende 1 kann auch eine geringfügige Kegelform aufweisen, um das Einsetzen in ein Bohrloch zu erleichtern. An den sich über etwa zwei Drittel der Länge des Befestigungselements erstreckenden mit dem Betongewinde 3 versehenen Schaftabschnitt 2 schließt sich ein Verbindungsabschnitt 4 an, der kein Gewinde aufweist. Zusätzlich ist der gewindefreie Verbindungsabschnitt 4 mit einem verringerten Durchmesser versehen. Der Durchmesser des Verbindungsabschnitts 4 ist kleiner als der Kerndurchmesser des vorderen mit dem Gewinde 3 versehenen Schaftabschnitts. An diesen Verbindungsabschnitt schließt sich dann ein weiterer Abschnitt 5 mit einem metrischen Außengewinde 6 an. Dieses metrische Außengewinde 6 dient dazu, beispielsweise eine Mutter aufzuschrauben.

Es wurde bereits erwähnt, dass der Durchmesser des Verbindungsabschnitts 4 kleiner ist als der Kerndurchmesser des Gewindeabschnitts 2, beispielsweise um 30 Prozent. Die Länge des Verbindungsabschnitts 4 entspricht wiederum etwa 0,2 bis 0,4 der Länge des gesamten Befestigungselements, anderes ausgedrückt, etwa 0,4 bis 0,7 der Länge des mit dem Betongewinde 3 versehenen vorderen Schaftabschnitts 2.

Der Befestigungsabschnitt 5 kann beispielsweise einen Innensechskant aufweisen, mit dem das Befestigungselement verdreht werden kann. Auch ein Mehrkantansatz ist möglich, je nach Erfordernis.

Die nochmals vereinfachte Figur 2 zeigt die Art, wie das Befestigungselement nach der Erfindung verwendet werden kann. In ein Mauerwerk 7, beispielsweise eine aus Beton bestehende Brücke, wird ein Bohrloch 8 gebohrt. Das Bohrloch 8 wird an einer Stelle angebracht, wo in dem Bauwerk 7 eine Vertiefung 9 vorhanden ist, in die später eine metallische Platte 10 eingelegt werden soll.

Nach dem Bohren des Bohrlochs 8 wird das Befestigungselement mit Hilfe des erwähnten Innensechskants eingeschraubt. Selbstverständlich ist die Länge und der Durchmesser des Bohrlochs auf die Länge und das Nennmaß des Befestigungselements abgestimmt. Beim Einschrauben des Befestigungselements furcht sich das Betongewinde 3 ein Gegengewinde in der Wand des Bohrlochs. Das Einschrauben geschieht solange, bis das äußere Ende des Befestigungselementes etwa mit der Oberfläche des Mauerwerks 7 im Bereich außerhalb der Vertiefung 9 bündig verläuft. In dieser Position ist der gesamte Verbindungsabschnitt 4 im Mauerwerk verschwunden.

Anschließend wird die bereits erwähnte Metallplatte 10, die ein durchgehendes Loch aufweist, auf den Befestigungsabschnitt 5 des Befestigungselements aufgefädelt und in die Vertiefung 9 eingelegt. Dann wird auf den Befestigungsabschnitt 5 eine Mutter 11 aufgesetzt und fest gezogen. Das Festschrauben der Mutter 11 geschieht mit einem Drehmoment, das ausreichend ist, eine Anpresskraft in Richtung senkrecht zur Oberfläche des Mauerwerks 7 zu erzeugen, die um einen bestimmten Betrag höher ist als die Anpresskraft, die als minimale Grenze immer vorhanden sein muss. Bei dem Festziehen der Mutter 11 erfolgt eine Dehnung des Verbindungsabschnitts 4, der auf diese Weise sehr stark gespannt wird. Bei einer möglichen geringfügigen Verschiebung des formschlüssig eingesetzten Abschnitts 2 verringert sich die Spannkraft des Verbindungsabschnitts 4, aber nicht unter die vorher festgelegte Grenze.

Um die richtige Dimensionierung des Befestigungselements zu bewirken, stehen mehrere Parameter zur Verfügung, darunter das Durchmesserverhältnis und das Längenverhältnis der verschiedenen Abschnitte des Befestigungselements.

## Patentansprüche

1. Befestigungselement für ein Bauwerk (7), mit
1.1 einem in ein Bohrloch (8) einzusetzenden mit dem Bauwerk (7) formschlüssig zu verbindenden Schaftabschnitt (2), der
1.2 ein Betongewinde (3) aufweist,
1.3 einem daran anschließenden im wirksamen Durchmesser verringerten außer Eingriff mit dem Bauwerk (7) bleibenden gewindefreien Verbindungsabschnitt (4),
1.4 dessen Durchmesser kleiner als der Kerndurchmesser des Einschraubabschnitts (2) ist, sowie mit
1.5 einem daran anschließenden Befestigungsabschnitt (5).

2. Befestigungselement nach einem der vorhergehenden Ansprüche, bei dem die Länge des Verbindungsabschnitts (4) etwa 0,2 bis etwa 0,4 der Länge des Befestigungselements insgesamt entspricht.

3. Befestigungselement nach einem der vorhergehenden Ansprüche, bei dem der Verbindungsabschnitt (4) im Bohrloch (8) anzuordnen ist.

4. Verwendung eines Befestigungselements nach einem der vorhergehenden Ansprüche zur Befestigung von Bauelementen (10) an einem Bauwerk (7) in einer Zugzone.

5. Verwendung nach Anspruch 4, bei der der Verbindungsabschnitt (4) in dem Bauwerk (7) ohne Kraftschluss mit dem Bohrloch (8) angeordnet wird.

6. Verwendung nach Anspruch 4 oder 5, bei der der Verbindungsabschnitt (4) in einem stufenartigen erweiterten Bohrloch (8) angeordnet wird.

## Claims

1. A fastening element for a structure (7),
1.1 having a shank section (2), which is to be inserted into a drilled hole (8) and to be connected in a form-fitting manner to the structure (7), and which
1.2 has a concrete thread (3),
1.3 having a non-threaded connecting section (4), which adjoins thereto, has a reduced effective diameter and remains out of engagement with the structure (7),
1.4 the diameter of which connecting section is smaller than the core diameter of the screwed-in section (2), and
1.5 having a fastening section (5) adjoining thereto.

2. The fastening element according to any one of the preceding claims, in which the length of the connecting section (4) corresponds to approximately 0.2 to approximately 0.4 of the length of the fastening element overall.

3. The fastening element according to any one of the preceding claims, in which the connecting section (4) is to be arranged in the drilled hole (8).

4. A use of a fastening element according to any one of the preceding claims for fastening structural elements (10) to a structure (7) in a tensile zone.

5. The use according to claim 4, in which the connecting section (4) is arranged in the structure (7) without a force fit with the drilled hole (8).

6. The use according to claim 4 or 5, in which the connecting section (4) is arranged in a drilled hole (8) that is widened in a step-like manner.

## Revendications

1. Élément de fixation pour un ouvrage de construction (7), comprenant
1.1 un tronçon d'arbre (2) à intégrer dans un trou foré (8), à relier en complémentarité de forme avec l'ouvrage de construction (7), qui
1.2 présente un filetage de vis à béton (3),
1.3 un tronçon de liaison (4) sans filet se raccordant dessus et de diamètre effectif plus réduit, restant hors de prise d'avec l'ouvrage de construction (7),
1.4 dont le diamètre est inférieur au diamètre du noyau du tronçon fileté (2) ainsi
1.5 qu'un tronçon de fixation (5) se raccordant dessus.

2. Élément de fixation selon l'une des revendications précédentes, dans lequel la longueur du tronçon de liaison (4) correspond en tout à environ 0,2 jusqu'à environ 0,4 de la longueur de l'élément de fixation.

3. Élément de fixation selon l'une des revendications précédentes, dans lequel le tronçon de liaison (4) doit être disposé dans le trou foré (8).

4. Utilisation d'un élément de fixation selon l'une des revendications précédentes pour fixer des éléments de construction (10) sur un ouvrage de construction (7) dans une zone de traction.

5. Emploi selon la revendication 4, dans lequel le tronçon de liaison (4) est disposé dans l'ouvrage de construction (7) sans adhérence de forces avec le trou foré (8).

6. Emploi selon la revendication 4 ou 5, dans lequel le tronçon de liaison (4) est disposé dans un trou foré (8) élargi de type étagé.
